# EUROPEAN PATENT APPLICATION

(11) **EP 2 975 607 A1**
(43) Date of publication of application: **20.01.2016**
(21) Application number: 14762696.4
(22) Date of filing: 20.02.2014
(51) Int. Cl.: G09G 5/00, G06F 3/048, G09G 5/36

(54) **DISPLAY CONTROL DEVICE, INFORMATION DEVICE, DISPLAY CONTROL METHOD, AND RECORDING MEDIUM**

(30) Priority: 14.03.2013 JP 2013051893
(71) Applicant: NEC CORPORATION, Tokyo 108-8001 (JP)
(72) Inventor: MORI, Kenichi, Kawasaki-shi Kanagawa 211-8666 (JP)
(74) Representative: Vossius & Partner Patentanwälte Rechtsanwälte mbB
(86) International application number: PCT/JP2014/053984
(87) International publication number: WO 2014/141843

(57) **Abstract**

A display control device includes: detection means that detects an inclination and movement amount of the display control device; and control means that switches a display direction of an image according to the inclination if the movement amount satisfies a predetermined condition, and maintains the display direction of the image irrespective of the inclination if the movement amount does not satisfy the predetermined condition.

## Description

### Technical Field

The present invention relates to a display control device, an information apparatus, a display control method and a program, and more particularly to a display control device that controls a screen display, an information apparatus, a display control method and a program.

### Background Art

Information apparatuses provided with an acceleration sensor have been widespread. In information apparatuses provided with an acceleration sensor, an inclination (direction) of the information apparatus is detected by the acceleration sensor, and a direction of a display image on the information apparatus is changed according to the result of the detection.

For example, the display image is in a longitudinally long state if the information apparatus, such as a smartphone, is held in a longitudinally long state, and the display image is in a laterally long state if the information apparatus is held in a laterally long state.

The direction of the information apparatus and the top-to-down direction of a user's face, however, do not necessarily correspond to each other. Therefore, there may be a case where, because the direction of the display image and the top-to-down direction of the user's face are different from each other, the display image is displayed in a direction in which it is difficult for the user to recognize the display image.

For example, when the user lies down, the top-to-down direction of the user's face and the gravity direction often do not correspond to each other. Therefore, if the direction of a display image is changed according to the direction of the information apparatus when the user lies down, there is a possibility that the display image will be displayed in a direction in which it is difficult for the user to recognize the display image.

In Patent Literature 1, a mobile terminal apparatus is described which is capable of preventing a display image from being displayed in a direction in which it is difficult for a user to recognize the display image.

The mobile terminal apparatus described in Patent Literature 1 is provided with a rotated display mode in which an image is rotated according to the inclination of the mobile terminal apparatus and a locked display mode in which the direction of an image is locked irrespective of the inclination of the mobile terminal apparatus, and the inclination, the movement amount and the movement direction of the mobile terminal apparatus are detected by an acceleration sensor.

If a movement direction and a movement amount under the rotated display mode are the gravity direction and a distance between 50 cm and 200 cm, including 50 cm and 200 cm, the mobile terminal apparatus described in Patent Literature 1 will determine that a user has transitioned into a state of lying down and switches the display mode to the locked display mode.

Further, if a movement direction and a movement amount under the locked display mode are the counter-gravity direction and a distance of 50 cm or more, the mobile terminal apparatus described in Patent Literature 1 will determine that the user has transitioned into a state of standing and switches the display mode to the rotated display mode.

### Citation List

### Patent Literature

Patent Literature 1: JP2012-58332A

### Summary of Invention

### Technical Problem

It is necessary for the mobile terminal apparatus described in Patent Literature 1 to detect both the movement amount and movement direction of the mobile terminal apparatus in order to determine whether or not to switch the display direction of an image according to an inclination.

Therefore, there has been a demand for a method of reducing the number of kinds of pieces of information required for determining whether or not to switch the display direction of an image according to an inclination.

The object of the present invention is to provide a display control device capable of solving the above problem, an information apparatus, a display control method and a program.

### Solution to Problem

A display control device according to the present invention includes:
detection means that detects an inclination and movement amount of the display control device; and
control means that switches a display direction of an image according to the inclination if the movement amount satisfies a predetermined condition, and maintains the display direction of the image irrespective of the inclination if the movement amount does not satisfy the predetermined condition.

A display control method according to the present invention is a display control method implemented by a display control device, the method comprising:
detecting an inclination and movement amount of the display control device; and
switching a display direction of an image according to the inclination if the movement amount satisfies a predetermined condition, and maintaining the display direction of the image irrespective of the inclination if the movement amount does not satisfy the predetermined condition.

A recording medium according to the present invention is a computer-readable recording medium in which a program is recorded, the program causing a computer to execute:
a detection procedure of detecting an inclination and movement amount of the computer; and
a control procedure of switching a display direction of an image according to the inclination if the movement amount satisfies a predetermined condition, and maintaining the display direction of the image irrespective of the inclination if the movement amount does not satisfy the predetermined condition.

### Advantageous Effect of Invention

According to the present invention, it becomes possible to reduce the number of kinds of pieces of information required for determining whether or not to switch a display direction of an image according to the inclination.

### Brief Description of Drawings

[Figure 1] Figure 1 is a block diagram showing display control device 1 of a first exemplary embodiment.
[Figure 2] Figure 2 is a flowchart illustrating the operation of display control device 1.
[Figure 3] Figure 3 is a block diagram showing information apparatus 11 of a second exemplary embodiment.
[Figure 4] Figure 4 is a flowchart illustrating the operation of information apparatus 11.
[Figure 5] Figure 5 is a diagram illustrating an example of changing a display direction on display section 12.
[Figure 6] Figure 6 is a diagram illustrating an example of changing a display direction on display section 12.
[Figure 7] Figure 7 is a diagram showing an example of a relationship between a display direction of an image and the state of information apparatus 11.
[Figure 8] Figure 8 is a diagram showing an example of a relationship between a display direction of an image and the state of information apparatus 11.
[Figure 9] Figure 9 is a diagram showing an example of a relationship between a display direction of an image and the state of information apparatus 11.

### Description of Embodiments

Exemplary embodiments will be described below with reference to drawings.

### (First exemplary embodiment)

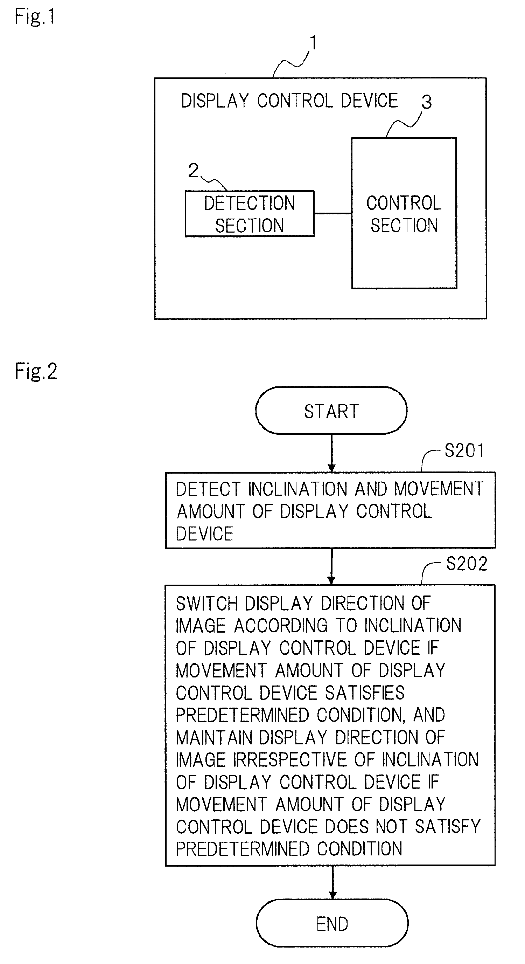

Figure 1 is a block diagram showing display control device 1 of a first exemplary embodiment of the present invention.

In Figure 1, display control device 1 is configured with detection section 2 and control section 3.

Detection section 2 is an example of detection means, and it is, for example, an acceleration sensor. Detection section 2 detects an inclination and movement amount of display control device 1.

Control section 3 is an example of control means. Control section 3 controls display control device 1. For example, control section 3 controls a display direction of an image based on the result detected by detection section 2.

Next, an operation will be described.

Figure 2 is a flowchart illustrating the operation of display control device 1.

Detection section 2 detects the inclination and movement amount of display control device 1 (step S201).

Control section 3 switches a display direction of an image according to the inclination of display control device 1 detected by detection section 2 if the movement amount of display control device 1 detected by detection section 2 satisfies a predetermined condition, and maintains the display direction of the image irrespective of the inclination of display control device 1 if the movement amount of display control device 1 does not satisfy the predetermined condition (step S202).

Next, an advantageous effect of the present exemplary embodiment will be described.

According to the present exemplary embodiment, detection section 2 detects the inclination and movement amount of display control device 1. Control section 3 switches a display direction of an image according to the inclination of display control device 1 if the movement amount of display control device 1 satisfies a predetermined condition and maintains the display direction of the image irrespective of the inclination of display control device 1 if the movement amount of display control device 1 does not satisfy the predetermined condition.

Therefore, based on the movement amount of the display control device, it becomes possible to determine whether or not to switch the display direction of an image according to the inclination of display control device 1. Therefore, it becomes possible to reduce the number of kinds of pieces of information required for determining whether or not to switch the display direction of an image according to an inclination.

### (Second exemplary embodiment)

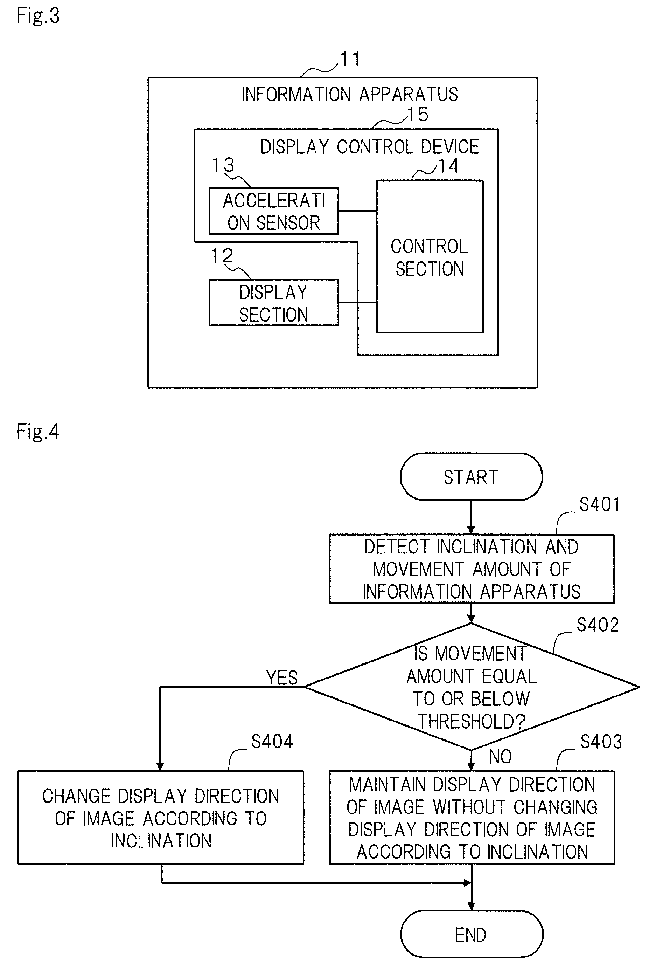

Figure 3 is a block diagram showing information apparatus 11 of a second exemplary embodiment of the present invention.

In Figure 3, information apparatus 11 is, for example, a mobile phone or a smartphone. Information apparatus 11 is not limited to a mobile phone or a smartphone but can be appropriately changed. For example, information apparatus 11 may be a game machine, a table PC (Personal Computer), a notebook PC, a PDA (Personal Data Assistant: a mobile information terminal), a tablet terminal or a digital camera.

Information apparatus 11 includes display section 12, acceleration sensor 13 and control section 14. If information apparatus 11 is a mobile phone or a smartphone, functional blocks for realizing other functions of the mobile phone or the smartphone are required. However, since they are well-known, they are omitted in Figure 3.

Display section 12 is an example of display means, and can be, for example, a display device such as an LCD (Liquid Crystal Display) and an organic EL (Electro Luminescence) display. Display section 12 is not limited to an LCD or an organic EL display but can be appropriately changed. Display section 12 displays an image on a display surface.

Acceleration sensor 13 is an example of detection means. Acceleration sensor 13 measures gravity acceleration and detects the movement amount and inclination (attitude) of information apparatus 11.

Control section 14 is an example of control means. Control section 14 controls the operation of information apparatus 11. For example, control section 14 controls a display direction of an image on display section 12 on based on the result of detection by acceleration sensor 13.

Acceleration sensor 13 and control section 14 are included in display control device 15.

Next, an operation will be described.

Figure 4 is a flowchart illustrating the operation of information apparatus 11.

Acceleration sensor 13 detects the inclination and movement amount of information apparatus 11 (step S401).

Then, acceleration sensor 13 transmits a detection signal, which indicates a result of the detection of the inclination and movement amount of information apparatus 11, to control section 14.

When receiving the detection signal from acceleration sensor 13, control section 14 recognizes the inclination and movement amount of information apparatus 11 based on the detection signal.

Then, control section 14 determines whether the movement amount of information apparatus 11 is equal to or below a threshold set in advance (step S402).

The condition in which the movement amount of information apparatus 11 is equal to or below the threshold set in advance is an example of a predetermined condition.

Further, the threshold is set in control section 14 in advance. For example, 50 cm is used as the threshold. The threshold is not limited to 50 cm but can be appropriately changed.

If the movement amount of information apparatus 11 is larger than the threshold at step S402, control section 14 maintains the display direction of an image without performing a process for changing the display direction of the image on display section 12, irrespective of the inclination of information apparatus 11 (step S403).

On the other hand, if the movement amount of information apparatus 11 is equal to or below the threshold, control section 14 performs the process for changing the display direction of the image on display section 12 according to the inclination of information apparatus 11 (step S404).

Here, a control method for changing a display direction of an image on display section 12 will be described.

Control section 14 detects an amount of change in the angle of the inclination of information apparatus 11 based on the detection signal from acceleration sensor 13 and recognizes the amount of rotation of information apparatus 11 from the amount of change. Then, if the amount of rotation of information apparatus 11 is within a range set in advance, control section 14 changes the display direction of the image on display section 12 into a direction in which information apparatus 11 has rotated.

Since the control method for changing a display direction of an image on display section 12 is a well-known technique, detailed description thereof will be omitted.

Next, an example of changing a display direction of an image on display section 12 will be described.

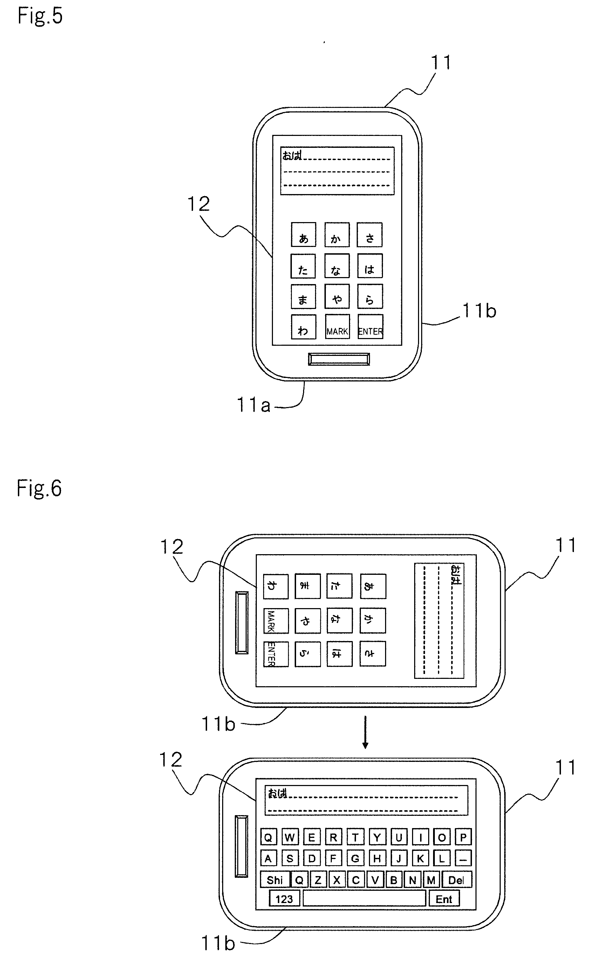

As shown in Figure 5, if information apparatus 11 that is provided with display section 12 in a rectangular shape is held such that short side 11 a of information apparatus 11 is positioned downside (hereinafter also referred to as "held in a longitudinally long state"), and such that the image displayed on display section 12 is in a longitudinally long state.

On the other hand, when desiring to change the character input method to a QWERTY keyboard layout input method to edit sentences on a laterally long display, a user changes the way to hold information apparatus 11 so that long side 11b of information apparatus 11 is positioned downside (hereinafter also referred to as "held in a laterally long state").

Therefore, as shown in Figure 6, information apparatus 11 rotates clockwise by 90 degrees from the state shown in Figure 5. Acceleration sensor 13 detects this rotation and transmits a detection result to control section 14. When receiving the detection result of acceleration sensor 13, control section 14 changes the direction of the image (a sentence editing screen) so that the image is in a laterally long state, that is, to a direction obtained by rotating the image counterclockwise by 90 degrees according to the detection result.

However, since information apparatus 11 is held by the user, there is a possibility that the inclination of information apparatus 11 may temporarily change to correspond to slight movement by the user concerning which the user is not aware. Therefore, in order not to change the display direction of the image in response to a rotation operation for a short time (for example, time less than one second), control section 14 changes the display direction of the image if the rotation state is maintained for a constant time that is set in advance (for example, one second or more).

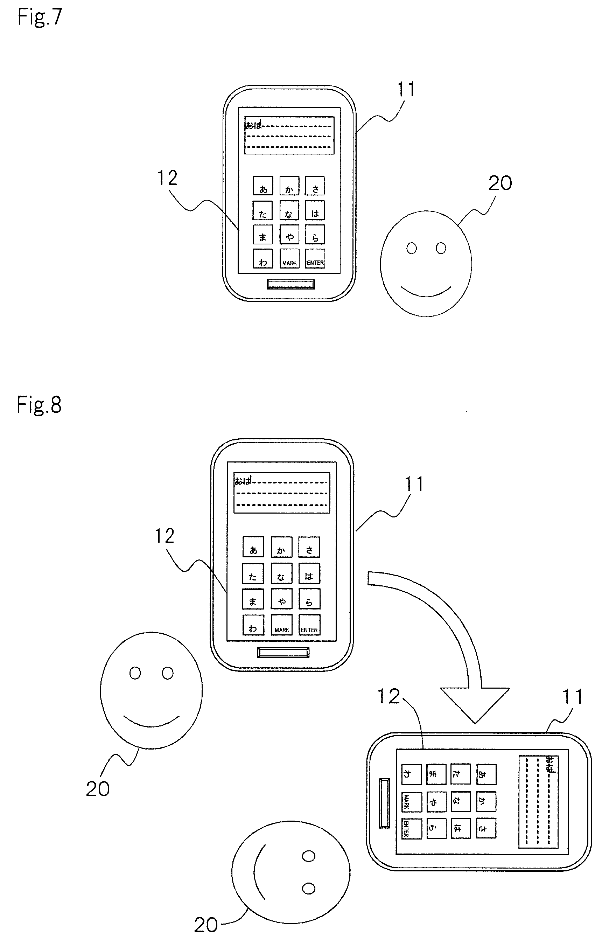

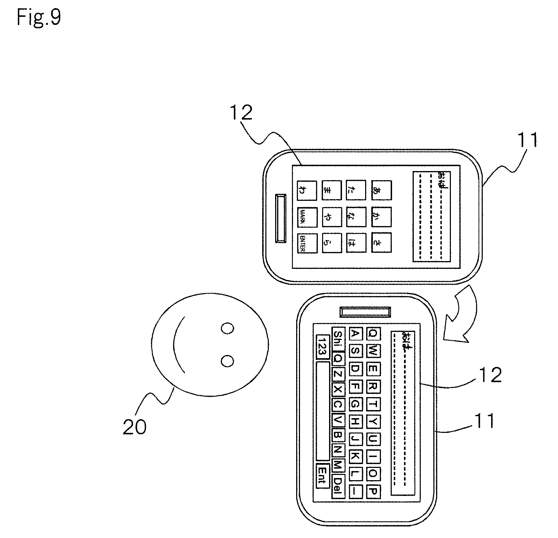

Figures 7 to 9 are diagrams showing an example of a relationship between a display direction of an image and the state of information apparatus 11.

Figure 7 is a diagram showing a state in which user 20 holds information apparatus 11 in the longitudinally long state when user 20 sits down and the top-to-down direction of the user's face is in a vertical direction. At this time, as shown in Figure 7, an image on display section 12 is displayed in the longitudinally long state, and up and down and left and right direction of the image are in a normal state for user 20.

Figure 8 is a diagram showing a state in which user 20 has transitioned to a state of lying down from the state shown in Figure 7 while holding information apparatus 11 and in which user 20 is holding information apparatus 11 in the laterally long state while the top-to-down direction of the user's face is in a horizontal direction.

The movement amount of information apparatus 11 by the series of motions is larger than the threshold, and control section 14 executes step S403. Therefore, though information apparatus 11 has rotated, the display direction of the image on display section 12 is not changed. Therefore, the up and down and left and right direction of the image are in the normal state for user 20.

Then, if user 20 rotates information apparatus 11 clockwise by 90 degrees and changes the way of holding information apparatus 11 so that information apparatus 11 is in the laterally long state relative to the top-to-down direction of the user's face in order to see the image in the laterally long state while user 20 is lying down, the movement of information apparatus 11 will be limited to a slight shaking accompanying the change in the way of holding information apparatus 11. Therefore, the movement amount of information apparatus 11 is equal to or below the threshold. Accordingly, control section 14 executes step S404.

At step S404, control section 14 changes the direction of the image on display section 12 so that the image is in the laterally long state, that is, to a direction obtained by rotating the image counterclockwise by 90 degrees according to the inclination of information apparatus 11.

Next, an advantageous effect of the present exemplary embodiment will be described in comparison with the mobile terminal apparatus described in Patent Literature 1.

In the mobile terminal apparatus described in Patent Literature 1, when a user lies down and the display mode transitions to the locked display mode, the locked display mode is not released unless the mobile terminal apparatus moves in the counter-gravity direction by 50 cm or more, that is, until the user transitions to a state of standing. Therefore, even if the user changes the direction of the mobile terminal apparatus after having transitioned to the state of lying down, the display direction of the screen is not changed, and it becomes difficult for the user to recognize the screen.

On the other hand, in the present exemplary embodiment, if the movement amount of information apparatus 11 is equal to or below the threshold, control section 14 switches a display direction of an image on display section 12 according to the inclination of information apparatus 11. Therefore, for example, if user 20 changes the direction of the information apparatus after having transitioned to the state of lying down, the display direction of the screen can be changed.

Further, in the present exemplary embodiment, if the movement amount of information apparatus 11 is larger than the threshold, control section 14 maintains a display direction of an image irrespective of the inclination of information apparatus 11. Therefore, for example, it becomes possible to, when the user transitions to the state of lying down, prevent the display direction of an image from being unnecessarily changed according to the inclination of information apparatus 11.

Further, in each of the above exemplary embodiments, display control device 1 or information apparatus 11 may be realized by a computer. In this case, the computer reads and executes a program recorded in a recording medium like a computer-readable CD-ROM (Compact Disk Read Only Memory) to execute the functions that display control device 1 or information apparatus 11 are provided with. The recording medium is not limited to a CD-ROM but can be appropriately changed.

In each exemplary embodiment described above, the shown configuration is a mere example, and the present invention is not limited to the configuration.

The invention as claimed in the application has been described with reference to exemplary embodiments. The invention as claimed in the application, however, is not limited to the above exemplary embodiments. Various changes which can be understood by one skilled in the art can be made in the configuration and details of the invention as claimed in the application within the scope of the invention as claimed in the application. This application claims priority based on Japanese Patent Application No. 2013-51893 filed on March 14, 2013, the disclosure of which is hereby incorporated thereto in its entirety.

### Reference Signs List

- 1: display control device
- 2: detection section
- 3: control section
- 11: information apparatus
- 12: display section
- 13: acceleration sensor
- 14: control section
- 15: display control device

## Claims

1. A display control device comprising:
detection means that detects an inclination and movement amount of the display control device; and
control means that switches a display direction of an image according to the inclination if the movement amount satisfies a predetermined condition, and maintains the display direction of the image irrespective of the inclination if the movement amount does not satisfy the predetermined condition.

2. The display control device according to claim 1, wherein the predetermined condition is a condition in which the movement amount is equal to or below a threshold.

3. An information apparatus comprising:
the display control device according to claim 1 or 2; and
display means that displays the image.

4. A display control method implemented by a display control device, the method comprising:
detecting an inclination and movement amount of the display control device; and
switching a display direction of an image according to the inclination if the movement amount satisfies a predetermined condition, and maintaining the display direction of the image irrespective of the inclination if the movement amount does not satisfy the predetermined condition.

5. A computer-readable recording medium in which a program is recorded, the program causing a computer to execute:
a detection procedure of detecting an inclination and movement amount of the computer; and
a control procedure of switching a display direction of an image according to the inclination if the movement amount satisfies a predetermined condition, and maintaining the display direction of the image irrespective of the inclination if the movement amount does not satisfy the predetermined condition.
